# EUROPÄISCHE PATENTANMELDUNG

(11) **EP 4 201 848 A1**
(43) Veröffentlichungstag der Anmeldung: **28.06.2023**
(21) Anmeldenummer: 22211587.5
(22) Anmeldetag: 06.12.2022
(51) Int. Cl.: B65G 27/32

(54) **VIBRATIONSFÖRDERER ZUM FÖRDERN EINES FLÄCHIGEN WERKSTÜCKS, INSBESONDERE EINES BLECHS SOWIE MASCHINELLE ANORDNUNG MIT EINEM DERARTIGEN VIBRATIONSFÖRDERER**

(30) Priorität: 22.12.2021 DE 102021134314
(71) Anmelder: Trumpf Sachsen GmbH, 01904 Neukirch (DE)
(72) Erfinder: MÜLLER, Elisabeth, 02681 Wilthen (DE); GRUHL, Norbert, 02627 Hochkirch / OT Lehn (DE); KNOBEL, Carsten, 02681 WILTHEN (DE); SCHRÖTER, Georg, 01904 Steinigtwolmsdorf (DE)
(74) Vertreter: Kohler Schmid Möbus Patentanwälte

(57) **Zusammenfassung**

Ein Vibrationsförderer (100) zum Fördern eines flächigen Werkstücks, insbesondere eines Blechs, weist eine Fördereinheit (102) mit einer Basis (103) und Auflageelementen (4) für ein zu förderndes Werkstück auf. Die Auflageelemente (4) bilden mit ihren freien Enden eine Werkstück-Auflageebene (11) aus und sind gegen eine Senkrechte zu der Werkstück-Auflageebene (11) in einer Förderrichtung (13) der Fördereinheit (102) geneigt. Die Förderrichtung (13) ist definiert durch eine Orientierung der Auflageelemente (4) in der senkrechten Projektion in die Werkstück-Auflageebene (11). Die Förderrichtung (13) der Fördereinheit (102) ist variabel einstellbar, indem die Auflageelemente (4) der Fördereinheit (102) in ihrer Orientierung variabel einstellbar sind.

Eine maschinelle Anordnung umfasst zusätzlich zu Funktionseinheiten einen Vibrationsförderer (100) der vorstehenden Art.

## Beschreibung

Die Erfindung betrifft einen Vibrationsförderer zum Fördern eines flächigen Werkstücks, insbesondere eines Blechs,
- mit einer Fördereinheit, die eine Basis sowie Auflageelemente für ein zu förderndes Werkstück umfasst,
   - wobei die Auflageelemente einerseits an der Basis angebracht und andererseits an von der Basis abliegenden freien Enden zur Lagerung des Werkstücks ausgebildet sind,
- mit einer Tragstruktur für die Fördereinheit, an welcher die Fördereinheit mittels der Basis gelagert ist,
   - wobei die Auflageelemente der an der Tragstruktur gelagerten Fördereinheit mit ihren freien Enden gegenüber der Tragstruktur entgegen der Schwerkraftrichtung vorstehen und eine Werkstück-Auflageebene der Fördereinheit ausbilden und
   - wobei die Auflageelemente der Fördereinheit gegen eine Senkrechte zu der Werkstück-Auflageebene in einer Förderrichtung geneigt sind, die definiert ist, indem die Auflageelemente in der senkrechten Projektion in die Werkstück-Auflageebene eine Orientierung aufweisen
      sowie
- mit einem Schwingungserzeuger, mittels dessen die Fördereinheit mit einer längs der Wirkungslinie der Schwerkraft ausgeführten oszillierenden Bewegung antreibbar ist,
   - wobei die Auflageelemente der Fördereinheit aufgrund der oszillierenden Bewegung unter der Wirkung des zu fördernden Werkstücks mit ihren freien Enden gegen die Wirkung einer Rückstellkraft relativ zu der Basis in der Förderrichtung der Fördereinheit auslenkbar sind.

Die Erfindung betrifft außerdem eine Vibrationsförderer-Anordnung zum Fördern eines flächigen Werkstücks, insbesondere eines Blechs, mit Vibrationsförderern der vorgenannten Art sowie eine maschinelle Anordnung zum Bearbeiten eines flächigen Werkstücks, insbesondere eines Bleches, mit einem derartigen Vibrationsförderer und/oder mit einer derartigen Vibrationsförderer-Anordnung.

Vibrationsförderer der eingangs genannten Art zum Fördern von Blechen und von Produkten der Blechbearbeitung sind seit geraumer Zeit gebräuchlich. Die freien Enden der Auflageelemente der Fördereinheit der Vibrationsförderer bilden eine Werkstück-Auflageebene der Fördereinheit aus, wobei die Auflageelemente gegen eine Senkrechte zu der Werkstück-Auflageebene in einer Förderrichtung der Fördereinheit geneigt sind. Die Förderrichtung der Fördereinheit wird durch die Orientierung der freien Enden der Auflageelemente in der senkrechten Projektion der Auflageelemente in die Werkstück-Auflageebene definiert. Mittels eines Schwingungserzeugers wird die Fördereinheit in eine vertikale Vibrationsbewegung versetzt. Bei jedem der mittels des Schwingungserzeugers erzeugten Aufwärtshübe entgegen der Schwerkraftrichtung bewirkt das auf freien Enden der Auflageelemente der Fördereinheit gelagerte Werkstück aufgrund seiner Massenträgheit eine Auslenkbewegung der freien Enden der Auflageelemente in der Förderrichtung. Insbesondere aufgrund der zwischen den freien Enden der Auflageelemente und dem Werkstück wirksamen Reibung schieben die Auflageelemente bei ihrer Auslenkbewegung das Werkstück in der Förderrichtung über eine Weglänge vor, die in guter Näherung dem Betrag der sich in der Förderrichtung erstreckenden Komponente der Auslenkbewegung der Auflageelemente entspricht. Der sich an einen Aufwärtshub anschließende Abwärtshub in der Schwerkraftrichtung wird mit einer Geschwindigkeit ausgeführt, die derart hoch ist, dass das Werkstück bei dem Abwärtshub aufgrund seiner Massenträgheit in der Position längs der Wirkungslinie der Schwerkraft verharrt, die es am Ende des vorausgegangenen Aufwärtshubs eingenommen hat. Infolge der damit verbundenen Vergrößerung des Abstands zwischen dem Werkstück und der Basis der Fördereinheit stellen sich die Auflageelemente der Fördereinheit aufgrund einer auf die Auflageelemente entgegen der Förderrichtung wirkenden Rückstellkraft relativ zu dem in der vorgeschobenen Position verbleibenden Werkstück und der Basis der Fördereinheit entgegen der Förderrichtung in ihre Position zu Beginn des vorausgegangenen Aufwärtshubs zurück. Ein erneuter Aufwärtshub der Fördereinheit bewirkt einen weiteren Vorschub des Werkstücks in der Förderrichtung. Die periodische Bewegung der Fördereinheit längs der Wirkungslinie der Schwerkraft erzeugt auf diese Weise eine Förderbewegung des auf den Auflageelementen der Fördereinheit gelagerten Werkstücks, die sich aus einer Vielzahl von betragsmäßig kleinen Teilbewegungen des Werkstücks in der Förderrichtung zusammensetzt.

Ein gattungsgemäßer Vibrationsförderer ist offenbart in DE 10 2010 032 130 A1. Als Fördereinheiten vorgesehene Bürstenleisten sind im Falle des Standes der Technik fest auf einer Platte montiert, die als Tragstruktur des vorbekannten Vibrationsförderers vorgesehen ist. Um eine Förderung von Fördergut entlang einer Förderbahn zu ermöglichen, die zwei senkrecht zueinander verlaufende geradlinige Bahnabschnitt und eine die geradlinigen Bahnabschnitte miteinander verbindende Kurve aufweist, umfasst der vorbekannte Vibrationsförderer gerade Bürstenleisten zur Ausbildung der geradlinigen Bahnabschnitte und gebogene Bürstenleisten zur Ausbildung der Kurve der Förderbahn.

Einen Vibrationsförderer, eine Vibrationsförderer-Anordnung und eine mit einem Vibrationsförderer und/oder einer Vibrationsförderer-Anordnung versehene maschinelle Anordnung bereitzustellen, im Falle derer die Förderrichtung von flächigem Fördergut flexibel und insbesondere anwendungsbezogen definiert werden kann, ist Aufgabe der vorliegenden Erfindung.

Erfindungsgemäß gelöst wird diese Aufgabe durch den Vibrationsförderer gemäß Patentanspruch 1, durch die Vibrationsförderer-Anordnung gemäß Patentanspruch 14 und durch die maschinelle Anordnung gemäß Patentanspruch 15.

Im Falle der Erfindung werden Fördereinheiten eingesetzt, deren Auflageelemente in ihrer Orientierung, das heißt in der Orientierung ihrer freien Enden, in der senkrechten Projektion in die Werkstück-Auflageebene variabel einstellbar sind. Ein und dieselbe Fördereinheit kann folglich zur Förderung von Fördergut in unterschiedliche Förderrichtungen genutzt werden.

Als Schwingungserzeuger kommen erfindungsgemäß beispielsweise herkömmliche Unwuchtmotoren, Elektromagnetantriebe, Piezoaktuatoren, pneumatische Kolben- und Unwuchtvibratoren sowie pneumatische Muskeln in Frage.

Als Auflageelemente werden vorzugsweise elastische Auflageborsten und als Fördereinheiten mit derartigen Auflageborsten versehene Bürsten verwendet.

Die erfindungsgemäße Vibrationsförderer-Anordnung umfasst mehrere der erfindungsgemäßen Vibrationsförderer, die als baulich eigenständige Vorrichtungen vorgesehen und deren Fördereinheiten entlang der übergeordneten und gleichfalls variablen Förderrichtung der Anordnung aufeinander folgen.

An der erfindungsgemäßen maschinellen Anordnung bieten der erfindungsgemäße Vibrationsförderer und die erfindungsgemäße Vibrationsförderer-Anordnung aufgrund der variablen Förderrichtung die Möglichkeit, Funktionseinheiten der maschinellen Anordnung, die zusätzlich zu dem Vibrationsförderer und der Vibrationsförderer-Anordnung vorgesehen sind, anwendungsbezogen miteinander zu verknüpfen.

Zur variablen Einstellung der Orientierung der Auflageelemente einer Fördereinheit und somit zur variablen Einstellung der Förderrichtung der Fördereinheit und des mit der Fördereinheit versehenen Vibrationsförderers sowie der Vibrationsförderer-Anordnung bieten sich erfindungsgemäß unterschiedliche Möglichkeiten.

Gemäß Patentanspruch 2 wird die Orientierung der Auflageelemente der erfindungsgemäßen Fördereinheit verändert, indem die Auflageelemente relativ zu der Tragstruktur, an welcher die Fördereinheit gelagert ist, um eine senkrecht zu der Werkstück-Auflageebene verlaufende Stellachse verstellt werden. Zu diesem Zweck wird in vorteilhafter Ausgestaltung der Erfindung die Fördereinheit insgesamt um die senkrecht zu der Werkstück-Auflageebene verlaufende Stellachse zugestellt (Patentanspruch 3).

Im Falle der Erfindungsbauart gemäß Patentanspruch 4 bilden die Fördereinheit, die Tragstruktur für die Fördereinheit und der Schwingungserzeuger eine Baueinheit, die zur Veränderung der Förderrichtung der Fördereinheit um eine senkrecht zu der Werkstück-Auflageebene verlaufende Stellachse verstellt wird. Zweckmäßigerweise sind die Fördereinheit, die Tragstruktur und der Schwingungserzeuger dabei an einem um die Stellachse einstellbaren Grundgestell angebracht.

An dem erfindungsgemäßen Vibrationsförderer gemäß Patentanspruch 5 sind die Auflageelemente der Fördereinheit in ihrer Orientierung variabel einstellbar, indem die Auflageelemente relativ zu der Tragstruktur um eine gemeinsame Stellachse variabel einstellbar sind, die parallel zu der Werkstück-Auflageebene verläuft. Werden als Auflageelemente der Fördereinheit etwa Auflageborsten verwendet, die unter einem Winkel gegen die Senkrechte zu der Werkstück-Auflageebene geneigt sind, so kann eine zweite Förderrichtung, die einer ersten Förderrichtung entgegengesetzt ist, auf einfache Art und Weise dadurch eingestellt werden, dass die Auflageelemente um die Stellachse in eine Stellung geschwenkt werden, in welcher sie verglichen mit den Verhältnissen bei der Definition der ersten Förderrichtung gegensinnig gegen die Senkrechte zu der Werkstück-Auflageebene geneigt sind.

Auch die Verstellung der Auflageelemente um eine parallel zu der Werkstück-Auflageebene verlaufende Stellachse erfolgt vorzugsweise durch eine entsprechende Dreheinstellung der mit den Auflageelementen versehenen Basis der Fördereinheit (Patentanspruch 6).

In weiterer vorteilhafter Ausgestaltung des erfindungsgemäßen Vibrationsförderers sieht Patentanspruch 7 eine Fördereinheit vor, deren Basis an einer Umfangsfläche mit mehreren in Umfangsrichtung der Basis aufeinanderfolgenden Auflageelementfeldern versehen ist, wobei die Auflageelementfelder in einer Funktionsstellung die Werkstück-Auflageebene der Fördereinheit ausbilden und wobei die Auflageelemente der Auflageelementfelder bei Anordnung in der Funktionsstellung in der Projektion auf die Werkstück-Auflageebene unterschiedlich orientiert sind und folglich unterschiedliche Förderrichtungen definieren. Die Basis der Fördereinheit ist an der Tragstruktur in der Umfangsrichtung der Basis um eine Stellachse variabel einstellbar gelagert, die parallel zu der Werkstück-Auflageebene verläuft. Die Veränderung der Förderrichtung der Fördereinheit erfolgt durch Dreheinstellung der Basis um die parallel zu der Werkstück-Auflageebene verlaufende Stellachse.

Patentanspruch 8 betrifft einen erfindungsgemäßen Vibrationsförderer, der mehrere Fördereinheiten umfasst. Jede der Fördereinheiten ist in ihrer Förderrichtung einstellbar. Dabei ist eine einheitliche Förderrichtung der verschiedenen Fördereinheiten ebenso denkbar wie unterschiedliche Förderrichtungen. Neben der Förderrichtung können auch die Fördergeschwindigkeiten der verschiedenen Fördereinheiten unterschiedlich sein. Sind die Fördereinheiten als Bürsten ausgebildet, lassen sich unterschiedliche Fördergeschwindigkeiten insbesondere durch eine unterschiedliche Beschaffenheit der Auflageborsten der Bürsten realisieren.

Im Übrigen können für die weitere Fördereinheit die Merkmale wenigstens eines der Patentansprüche 2 bis 7 entsprechend vorgesehen sein.

Im Falle des Vibrationsförderers gemäß Patentanspruch 9 ist vorteilhafterweise eine Förderung des Förderguts über mehrere Fördereinheiten vorgesehen. Die entlang des Förderwegs des Förderguts aufeinanderfolgenden Fördereinheiten können hinsichtlich ihrer Förderrichtung und/oder hinsichtlich ihrer Fördergeschwindigkeit einheitlich aber auch unterschiedlich ausgelegt sein.

An dem Vibrationsförderer gemäß Patentanspruch 10 ist im Interesse eines möglichst einfachen und kostengünstigen Aufbaus für die an derselben Tragstruktur gelagerten Fördereinheiten ein gemeinsamer Schwingungserzeuger vorgesehen.

Alternativ können Fördereinheiten des erfindungsgemäßen Vibrationsförderers aber auch mittels separater Schwingungserzeuger in die für die Werkstückförderung erforderliche oszillierende Bewegung versetzt werden.

Im Interesse einer automatisierten Einstellung der Förderrichtung ist der Vibrationsförderer gemäß Patentanspruch 11 mit einer steuerbaren Stelleinrichtung, insbesondere mit einem steuerbaren Stellmotor, zur Einstellung der Orientierung der Auflageelemente der Fördereinheit(en) versehen. Die vorzugsweise numerische Steuerung für die Stelleinrichtung kann in eine übergeordnete Steuerung des erfindungsgemäßen Vibrationsförderers und/oder in eine übergeordnete Steuerung der erfindungsgemäßen Vibrationsförderer-Anordnung und/oder in eine übergeordnete Steuerung der erfindungsgemäßen maschinellen Anordnung integriert sein.

An einem erfindungsgemäßen Vibrationsförderer mit mehreren Fördereinheiten sind die Fördereinheiten in ihrer Förderrichtung vorzugsweise unabhängig voneinander variabel einstellbar (Patentanspruch 12).

In weiterer bevorzugter Ausgestaltung der Erfindung erfolgt die Steuerung der Stelleinrichtung zur Einstellung der Förderrichtung der Fördereinheit(en) in Abhängigkeit von dem zu fördernden Werkstück, etwa in Abhängigkeit von der Werkstückgröße oder der Werkstückgeometrie (Patentanspruch 13). Zu diesem Zweck kann für die Stelleinrichtung eine herkömmliche numerische Steuerung mit Werkstückerkennung vorgesehen sein.

Nachfolgend wird die Erfindung anhand beispielhafter schematischer Darstellungen näher erläutert. Es zeigen:
- Fig. 1:: eine erste Bauart eines Vibrationsförderers mit variabel einstellbarer Förderrichtung,
- Fig. 2:: eine zweite Bauart eines Vibrationsförderers mit variabel einstellbarer Förderrichtung,
- Fig. 3:: eine dritte Bauart eines Vibrationsförderers mit variabel einstellbarer Förderrichtung,
- Fig. 4:: eine vierte Bauart eines Vibrationsförderers mit variabel einstellbarer Förderrichtung,
- Fig. 5:: eine Vibrationsförderer-Anordnung mit mehreren Vibrationsförderern gemäß Figur 2,
- Fig. 6:: einen Vibrationsförderer gemäß Figur 2 mit einer numerischen Steuerung mit Werkstückerkennung zur variablen Einstellung der Förderrichtung und
- Fig. 7:: eine maschinelle Anordnung für die Blechbearbeitung mit mehreren Funktionseinheiten und einem zusätzlich zu den Funktionseinheiten vorgesehenen Vibrationsförderer gemäß Figur 2 zur Verknüpfung der Funktionseinheiten.

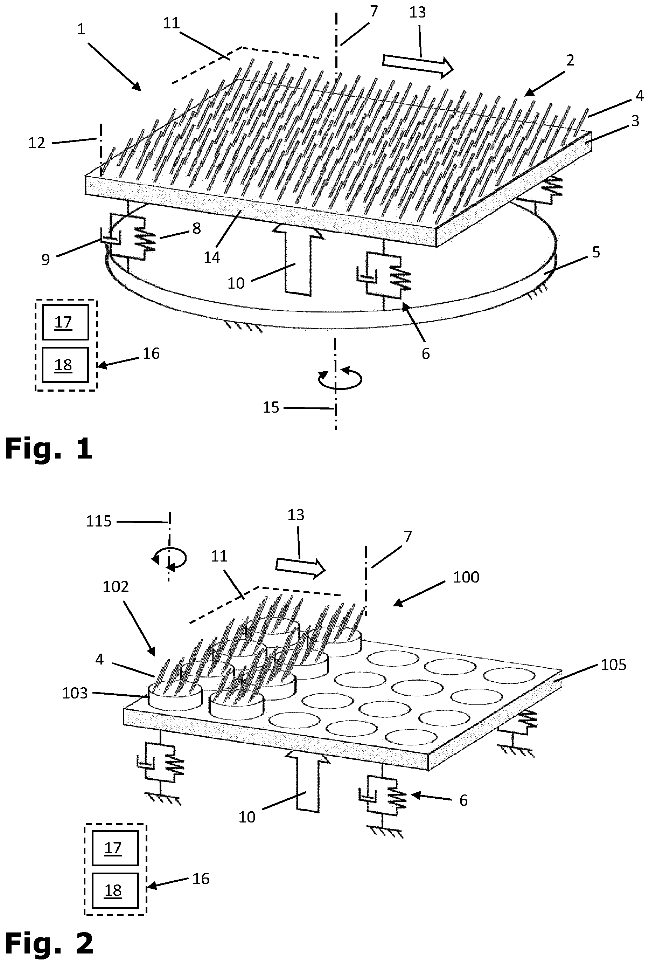

Gemäß Figur 1 umfasst ein Vibrationsförderer 1 zum Fördern flächiger Werkstücke eine Fördereinheit 2 mit einer als Basis vorgesehenen Basisplatte 3 und mit Auflageelementen in Form von Auflageborsten 4 zur Lagerung eines zu fördernden Werkstücks. Die Auflageborsten 4 sind einerseits an der Basisplatte 3 angebracht und andererseits an von der Basisplatte 3 abliegenden freien Enden zur Lagerung des zu fördernden Werkstücks ausgebildet.

An einer Tragstruktur 5 des Vibrationsförderers 1 ist die Fördereinheit 2 über eine Federanordnung 6 längs einer Wirkungslinie 7 der Schwerkraft federnd gelagert. Die Federanordnung 6 umfasst in dem dargestellten Beispielsfall insgesamt vier Schraubendruckfedern 8, denen jeweils ein Dämpfer 9 zugeordnet ist. Von den Schraubendruckfedern 8 und den Dämpfern 9 sind in Figur 1 jeweils drei zu erkennen. Die vierte Schraubendruckfeder 8 und der vierte Dämpfer 9 werden durch die Basisplatte 3 verdeckt. Die Federachsen der Schraubendruckfedern 8 verlaufen parallel zu der Wirkungslinie 7 der Schwerkraft.

Ein durch einen Pfeil angedeuteter herkömmlicher Schwingungserzeuger 10 ist zwischen der Tragstruktur 5 und der Basisplatte 3 der Fördereinheit 2 angeordnet.

Mit ihren gegenüber der Tragstruktur 5 und der Basisplatte 3 vorstehenden freien Enden bilden die Auflageborsten 4 eine in Figur 1 gestrichelt angedeutete Werkstück-Auflageebene 11 aus. Dabei sind die Auflageborsten 4 jeweils gegen eine Senkrechte 12 zu der Werkstück-Auflageebene 11 in einer Förderrichtung 13 der Fördereinheit 2 geneigt. Die Förderrichtung 13 wird definiert durch die Orientierung der freien Enden der Auflageborsten 4 in der senkrechten Projektion der Auflageborsten 4 in die Werkstück-Auflageebene 11. In dem dargestellten Beispielsfall verläuft die Förderrichtung 13 parallel zu einer Kante 14 der Basisplatte 3.

Zur Bewegung eines auf den Auflageborsten 4 abgelegten Werkstücks in der Förderrichtung 13 wird die Fördereinheit 2 mittels des Schwingungserzeugers 10 relativ zu der Tragstruktur 5 mit einer oszillierenden Bewegung längs der Wirkungslinie 7 der Schwerkraft angetrieben. Aufgrund der oszillierenden Bewegung werden die Auflageborsten 4 unter der Wirkung des zu fördernden Werkstücks mit ihren freien Enden gegen die Wirkung einer Rückstellkraft relativ zu der Basisplatte 3 in der Förderrichtung 13 ausgelenkt.

Zur variablen Einstellung der Förderrichtung 13 der Fördereinheit 2 ist die Fördereinheit 2 gemeinschaftlich mit der Tragstruktur 5 und dem Schwingungserzeuger 10 um eine Stellachse 15 variabel einstellbar, die senkrecht zu der Werkstück-Auflageebene 11 verläuft. Die Einstellung der Fördereinheit 2 um die Stellachse 15 wird mittels eines in Figur 1 stark schematisch dargestellter Stellantriebs 16 vorgenommen, der einen Stellmotor 17 und eine zur Steuerung des Stellmotors 17 vorgesehene numerische Steuerung 18 aufweist.

Anders als der Vibrationsförderer 1 gemäß Figur 1 umfasst ein Vibrationsförderer 100 gemäß Figur 2 eine Mehrzahl von Fördereinheiten 102, von denen der Einfachheit halber nur acht der insgesamt zwanzig Fördereinheiten 102 dargestellt sind. Die Fördereinheiten 102 sind jeweils an einer als Basis vorgesehenen scheibenartigen Basisplatte 103 mit Auflageelementen in Form von Auflageborsten 4 versehen.

Ebenfalls abweichend von dem Vibrationsförderer 1 ist an dem Vibrationsförderer 100 gemäß Figur 2 jede der Fördereinheiten 102 mittels der Basisplatte 103 an einer Tragstruktur 105 um eine Stellachse 115 einstellbar gelagert. Die von den Auflageborsten 4 der Fördereinheiten 102 ausgebildeten Werkstück-Auflageebenen der einzelnen Fördereinheiten 102 bilden eine gemeinsame Werkstück-Auflageebene 11. Die Stellachse 15 verläuft senkrecht zur der Werkstück-Auflageebene 11.

Zum Antrieb der Fördereinheiten 102 mit einer oszillierenden Bewegung längs der Wirkungslinie 7 der Schwerkraft versetzt der Schwingungserzeuger 10 des Vibrationsförderers 100 die Tragstruktur 105 gemeinsam mit sämtlichen Fördereinheiten 102 in eine entsprechende Vibrationsbewegung. Die Tragstruktur 105 ist über die Federanordnung 6 des Vibrationsförderers 100 an einem entsprechenden Widerlager, beispielsweise an einer mit dem Untergrund des Vibrationsförderers 100 verbundenen Bodenplatte des Vibrationsförderers 100, gelagert.

Zur gemeinschaftlichen Einstellung der Förderrichtung 13 werden die Fördereinheiten 102 mittels eines einzelnen numerischen Stellantriebs 16 um die Stellachsen 115 dreheingestellt. Der Stellmotor 17 des Stellantriebs 16 ist dabei an sämtliche Fördereinheiten 102 angebunden. Für entsprechende Anwendungsfälle kann aber auch ein numerischer Stellantrieb 16 für jede der Fördereinheiten 102 oder für jeweils eine Gruppe von Fördereinheiten 102 vorgesehen sein. In diesem Fall können die einzelnen Fördereinheiten 102 oder die einzelnen Gruppen von Fördereinheiten 102 getrennt voneinander in ihrer Förderrichtung 13 eingestellt werden. Bei getrennter Einstellung besteht die Möglichkeit, an den verschiedenen Fördereinheiten 102 oder an den verschiedenen Gruppen von Fördereinheiten 102 unterschiedliche Förderrichtungen 13 zu definieren.

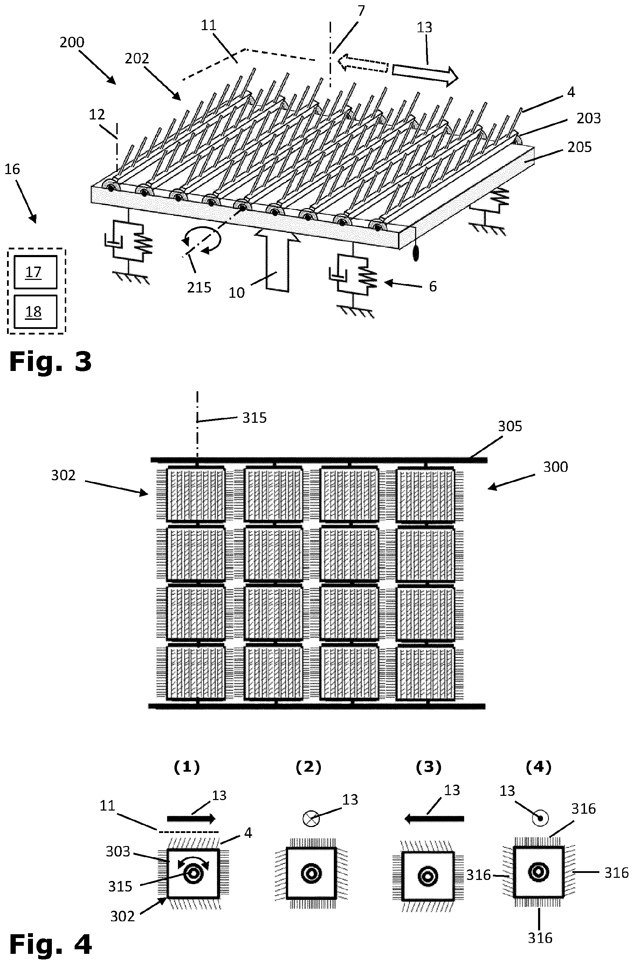

Ein in Figur 3 gezeigter Vibrationsförderer 200 stimmt mit dem Vibrationsförderer 100 gemäß Figur 2 insofern überein, als auch im Falle des Vibrationsförderers 200 mehrere Fördereinheiten, hier mehrere Fördereinheiten 202, an einer Tragstruktur, hier an einer Tragstruktur 205, gelagert sind.

Die Fördereinheiten 202 weisen als Basis jeweils eine Basisleiste 203 auf. Von der Basisleiste 203 der Fördereinheiten 202 stehen in gewohnter Weise Auflageborsten 4 vor, die mit ihren freien Enden eine Werkstück-Auflageebene 11 ausbilden.

Anders als im Falle der Vibrationsförderer 1 und 100 wird an dem Vibrationsförderer 200 die Förderrichtung 13 der Fördereinheiten 202 verändert, indem die Fördereinheiten 202 relativ zu der Tragstruktur 205 um eine parallel zu der Werkstück-Auflageebene 11 verlaufende Stellachse 215 verstellt werden. Durch Dreheinstellung der Fördereinheiten 202 um die jeweilige Stellachse 215 wird die Richtung der Neigung der Auflageborsten 4 gegenüber der Senkrechten 12 zu der Werkstück-Auflageebene 11 verändert und dadurch die Förderrichtung 13 in eine in Figur 3 durch einen gestrichelten Pfeil angedeutete Richtung umgekehrt.

Mittels eines numerisch gesteuerten Stellantriebs 16 können die Fördereinheiten 202 des Vibrationsförderers 200 gemeinschaftlich in ihrer Förderrichtung 13 verstellt werden. Für eine ebenfalls denkbare individuelle oder gruppenweise Umstellung der Förderrichtung 13 der Fördereinheiten 202 wird eine entsprechende Anzahl von Stellantrieben 16 benötigt.

Die oszillierende Bewegung der Fördereinheiten 202 zur Förderung von Werkstücken in der jeweils eingestellten Förderrichtung 13 wird wie zu Figur 2 beschrieben erzeugt.

Figur 4 zeigt einen Vibrationsförderer 300 mit Fördereinheiten 302, die an einer Tragstruktur 305 um eine Stellachse 315 variabel einstellbar gelagert sind. Ein als Basis der Fördereinheiten 302 vorgesehener und im Querschnitt quadratischer Basisstab 303 ist an einer Umfangsfläche mit mehreren in Umfangsrichtung des Basisstabs 303 aufeinanderfolgenden Auflageelementfeldern 316 versehen (Teildarstellung (4) in Figur 4). In einer Funktionsstellung der Auflageelementfelder 316, in welcher die Auflageborsten 4 des betreffenden Auflageelementfeldes 316 mit ihren freien Enden in Schwerkraftrichtung weisen, bilden die Auflageelementfelder 316 die Werkstück-Auflageebene 11 aus. Die Stellachse 315 der Fördereinheiten 302 verläuft parallel zu der Werkstück-Auflageebene 11.

Durch Dreheinstellung des Basisstabs 303 um die Stellachse 315 lassen sich unterschiedliche Auflageelementfelder 316 in die Funktionsstellung überführen.

In den Teildarstellungen (1) bis (4) von Figur 4 ist ein und dieselbe Fördereinheit 302 in den vier möglichen Drehstellungen um die Stellachse 315 dargestellt.

Ein Wechsel der in die Funktionsstellung überführten Auflageelementfelder 316 ist mit einer Veränderung der Förderrichtung 13 der jeweiligen Fördereinheit 302 verbunden. Grund hierfür ist der in den Teildarstellungen (1) bis (4) veranschaulichte Umstand, dass die Auflageborsten 4 der verschiedenen Auflageelementfelder 316 in der Funktionsstellung eine unterschiedliche Neigungsrichtung bezüglich der Senkrechten zu der Werkstück-Auflageebene 11 und damit eine unterschiedliche Orientierung in der senkrechten Projektion der Auflageborsten 4 in die Werkstück-Auflageebene 11 aufweisen.

In den Teildarstellungen (1) und (3) sind in der Funktionsstellung Auflageelementfelder 316 angeordnet, deren Auflageborsten 4 in der Zeichenebene gegen die Senkrechte zu der Werkstück-Auflageebene 11 gegensinnig geneigt sind. Infolgedessen ist die Förderrichtung 13 in Teildarstellung (1) der Förderrichtung 13 in Teildarstellung (3) entgegengesetzt.

Aus entsprechenden Gründen weist die Förderrichtung 13 der Fördereinheit 302 in Teildarstellung (2) entgegen der Förderrichtung 13 der Fördereinheit 302 in Teildarstellung (4). In diesen Fällen sind die Auflageborsten 4 der in die Funktionsstellung überführten Auflageelementfelder 316 senkrecht zu der Zeichenebene gegen die Senkrechte zu der Werkstück-Auflageebene 11 gegensinnig geneigt

Auch die Fördereinheiten 302 können gemeinschaftlich oder individuell in ihrer Förderrichtung 13 eingestellt werden.

Zur Erzeugung der für die Werkstückförderung erforderlichen oszillierenden Bewegung der Fördereinheiten 302 ist für die Tragstruktur 305 ein Antrieb der oben beschriebenen Art vorgesehen, mittels dessen die Tragstruktur 305 gemeinsam mit den daran gelagerten Fördereinheiten 302 mit einer vertikalen Vibrationsbewegung angetrieben wird.

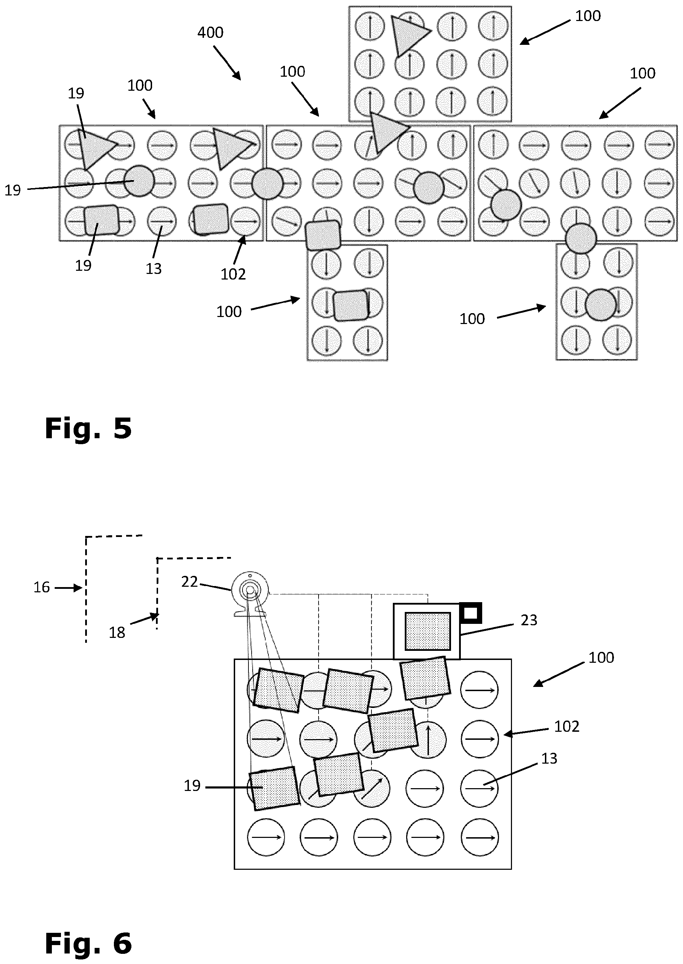

In Figur 5 ist eine Vibrationsförderer-Anordnung 400 dargestellt, die insgesamt sechs Vibrationsförderer 100 gemäß Figur 2 umfasst. Die Förderrichtungen 13 der Fördereinheiten 102 der Vibrationsförderer 100 sind durch Pfeile veranschaulicht. In der dargestellten Draufsicht auf die Werkstück-Auflageebene 11 wird deutlich, dass die Fördereinheiten 102 der Vibrationsförderer-Anordnung 400 in ihrer Förderrichtung 13 unabhängig voneinander und variabel einstellbar sind. Auf diese Art und Weise können Werkstücke, hier Blechzuschnitte 19, die unterschiedliche Geometrien aufweisen, in unterschiedliche Richtungen und damit in unterschiedliche Zielpositionen gefördert werden.

Figur 6 zeigt einen Vibrationsförderer 100 der in Figur 2 dargestellten Art mit einem numerisch gesteuerten Stellantrieb 16, dessen numerische Steuerung 18 eine Kamera 22 aufweist, die zur Werkstückerkennung dient und die den Fördervorgang folglich werkstückabhängig steuert.

Wie in Figur 6 angedeutet, können mittels des numerischen Stellantriebs 16 die Fördereinheiten 102 des Vibrationsförderers 100 in ihrer Förderrichtung 13 unabhängig voneinander eingestellt werden. Durch entsprechende Einzelsteuerung der Fördereinheiten 102 können Werkstücke 19 mit unterschiedlich gerichteten Förderbewegungen einer Werkstückablage 23 zugeführt werden. Aufgrund der Werkstückerkennung mittels der Kamera 22 ist sichergestellt, dass nur solche Werkstücke 19 zu der Werkstückablage 23 gelangen, die eine definierte Geometrie aufweisen. Wird mittels der Kamera 22 erkannt, dass Werkstücke mit einer zur Übergabe an die Werkstückablage 23 ungeeigneten Geometrie auf den Vibrationsförderer 100 gelangt sind, sorgt die numerische Steuerung 16 durch Abschalten des Schwingungserzeugers 10 des Vibrationsförderers 100 für eine Unterbrechung des Fördervorgangs.

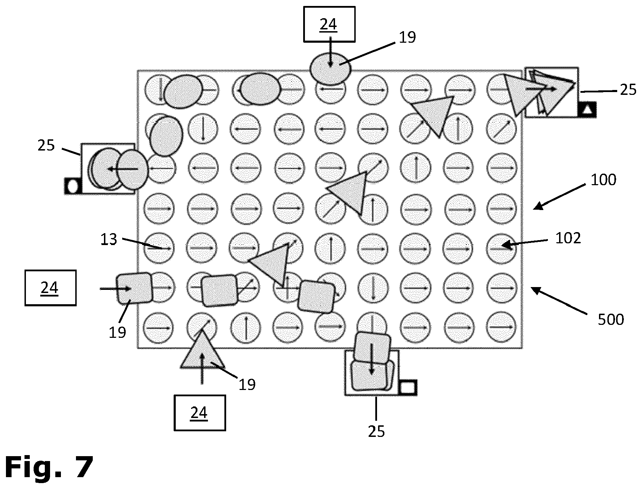

Eine in Figur 7 schematisch dargestellte maschinelle Anordnung 500 für die Blechbearbeitung, vorliegend für die trennende Blechbearbeitung, umfasst als Funktionseinheiten drei Schneidmaschinen 24 zur schneidenden Bearbeitung von Blechtafeln. Mittels der Schneidmaschinen 24 werden aus Blechtafeln als Werkstücke Blechzuschnitte 19 mit unterschiedlicher Geometrie erzeugt, die mittels herkömmlicher Beladeeinrichtungen an den in Figur 7 dargestellten Vibrationsförderer 100 der maschinellen Anordnung 500 übergeben werden. Durch entsprechende Steuerung der Förderrichtung 13 der Fördereinheiten 102 des Vibrationsförderers 100 werden die Blechzuschnitte 19 nach dem Beladen des Vibrationsförderers 100 in Abhängigkeit von ihrer Geometrie zu unterschiedlichen Werkstück-Sammelbehältern 25 transferiert, die als weitere Funktionseinheiten der maschinellen Anordnung 500 vorgesehen sind. Die werkstückabhängige Einstellung der Förderrichtung 13 der einzelnen Fördereinheiten 102 wird mittels eines numerischen Stellantriebs der zu Figur 6 beschriebenen Art vorgenommen.

## Patentansprüche

1. Vibrationsförderer zum Fördern eines flächigen Werkstücks (19), insbesondere eines Blechs,
• mit einer Fördereinheit (2, 102, 202, 302), die eine Basis (3, 103, 203, 303) sowie Auflageelemente (4) für ein zu förderndes Werkstück (19) umfasst,
- wobei die Auflageelemente (4) einerseits an der Basis (3, 103, 203, 303) angebracht und andererseits an von der Basis (3, 103, 203, 303) abliegenden freien Enden zur Lagerung des Werkstücks (19) ausgebildet sind,
• mit einer Tragstruktur (5, 105, 205, 305) für die Fördereinheit (2, 102, 202, 302), an welcher die Fördereinheit (2, 102, 202, 302) mittels der Basis (3, 103, 203, 303) gelagert ist,
- wobei die Auflageelemente (4) der an der Tragstruktur (5, 105, 205, 305) gelagerten Fördereinheit (2, 102, 202, 302) mit ihren freien Enden gegenüber der Tragstruktur (5, 105, 205, 305) entgegen der Schwerkraftrichtung vorstehen und eine Werkstück-Auflageebene der Fördereinheit (2, 102, 202, 302) ausbilden und
- wobei die Auflageelemente (4) der Fördereinheit (2, 102, 202, 302) gegen eine Senkrechte (12) zu der Werkstück-Auflageebene (11) in einer Förderrichtung (13) geneigt sind, die definiert ist, indem die Auflageelemente (4) in der senkrechten Projektion in die Werkstück-Auflageebene (11) eine Orientierung aufweisen
sowie
• mit einem Schwingungserzeuger (10), mittels dessen die Fördereinheit (2, 102, 202, 302) mit einer längs der Wirkungslinie (7) der Schwerkraft ausgeführten oszillierenden Bewegung antreibbar ist,
- wobei die Auflageelemente (4) der Fördereinheit (2, 102, 202, 302) aufgrund der oszillierenden Bewegung unter der Wirkung des zu fördernden Werkstücks (19) mit ihren freien Enden gegen die Wirkung einer Rückstellkraft relativ zu der Basis (3, 103, 203, 303) in der Förderrichtung (13) der Fördereinheit (2, 102, 202, 302) auslenkbar sind,
**dadurch gekennzeichnet, dass** die Förderrichtung (13) der Fördereinheit (2, 102, 202, 302) variabel einstellbar ist, indem die Auflageelemente (4) der Fördereinheit (2, 102, 202, 302) in ihrer Orientierung variabel einstellbar sind.

2. Vibrationsförderer nach Anspruch 1, **dadurch gekennzeichnet, dass** die Auflageelemente (4) der Fördereinheit (2, 102) in ihrer Orientierung variabel einstellbar sind, indem die Auflageelemente (4) relativ zu der Tragstruktur (5, 105) um eine gemeinsame Stellachse (15, 115) variabel einstellbar sind, die senkrecht zu der Werkstück-Auflageebene (11) verläuft.

3. Vibrationsförderer nach Anspruch 2, **dadurch gekennzeichnet, dass** die Auflageelemente (4) der Fördereinheit (102) relativ zu der Tragstruktur (105) um die gemeinsame Stellachse (115) variabel einstellbar sind, indem die Basis (103) der Fördereinheit (102) relativ zu der Tragstruktur (105) um die gemeinsame Stellachse (115) variabel einstellbar ist.

4. Vibrationsförderer nach einem der vorhergehenden Patentansprüche, **dadurch gekennzeichnet, dass** die Auflageelemente (4) der Fördereinheit (2) in ihrer Orientierung variabel einstellbar sind, indem die Fördereinheit (2) gemeinschaftlich mit der Tragstruktur (5) und dem Schwingungserzeuger (10) um eine Stellachse (15) variabel einstellbar ist, die senkrecht zu der Werkstück-Auflageebene (11) verläuft.

5. Vibrationsförderer nach einem der vorhergehenden Ansprüche, **dadurch gekennzeichnet, dass** die Auflageelemente (4) der Fördereinheit (202, 302) in ihrer Orientierung variabel einstellbar sind, indem die Auflageelemente (4) relativ zu der Tragstruktur (205, 305) um eine gemeinsame Stellachse (215, 315) variabel einstellbar sind, die parallel zu der Werkstück-Auflageebene (11) verläuft.

6. Vibrationsförderer nach Anspruch 5, **dadurch gekennzeichnet, dass** die Auflageelemente der Fördereinheit (202, 302) relativ zu der Tragstruktur (205, 305) um die gemeinsame Stellachse (215, 315) variabel einstellbar sind, indem die Basis (203, 303) der Fördereinheit (202, 302) relativ zu der Tragstruktur (205, 305) um die gemeinsame Stellachse (215, 315) variabel einstellbar ist.

7. Vibrationsförderer nach einem der vorhergehenden Ansprüche, **dadurch gekennzeichnet, dass** die Auflageelemente (4) der Fördereinheit (302) in ihrer Orientierung variabel einstellbar sind,
• indem die Basis (303) der Fördereinheit (302) an einer Umfangsfläche mit mehreren in Umfangsrichtung der Basis (303) aufeinanderfolgenden Auflageelementfeldern (316) versehen ist, die in einer Funktionsstellung die Werkstück-Auflageebene (11) der Fördereinheit (302) ausbilden,
• indem die Basis (303) der Fördereinheit (302) an der Tragstruktur (305) in der Umfangsrichtung der Basis (303) um eine Stellachse (315) variabel einstellbar gelagert ist, die parallel zu der Werkstück-Auflageebene (11) verläuft,
• indem durch Einstellung der Basis (303) der Fördereinheit (302) um die Stellachse (315) unterschiedliche Auflageelementfelder (316) in die Funktionsstellung überführbar sind und
• indem die Auflageelemente (4) der unterschiedlichen Auflageelementfelder (316) in der Funktionsstellung eine unterschiedliche Orientierung aufweisen und dadurch unterschiedliche Förderrichtungen (13) der Fördereinheit (302) definieren.

8. Vibrationsförderer nach einem der vorhergehenden Ansprüche, **dadurch gekennzeichnet, dass** die Fördereinheit (102, 202, 303) als erste Fördereinheit vorgesehen ist und dass der Vibrationsförderer zusätzlich zu der ersten Fördereinheit (102, 202, 303) wenigstens eine weitere Fördereinheit (102, 202, 303) aufweist,
• die eine Basis (103, 203, 303) sowie Auflageelemente (4) für ein zu förderndes Werkstück (19) umfasst,
- wobei die Auflageelemente (4) einerseits an der Basis (103, 203, 303) angebracht und andererseits an von der Basis (103, 203, 303) abliegenden freien Enden zur Lagerung des Werkstücks (19) ausgebildet sind,
• die mittels der Basis (103, 203, 303) an einer Tragstruktur (105, 205, 305) für die weitere Fördereinheit (102, 202, 302) gelagert ist,
- wobei die Auflageelemente (4) der an der Tragstruktur (105, 205, 305) gelagerten weiteren Fördereinheit (102, 202, 302) mit ihren freien Enden gegenüber der Tragstruktur (105, 205, 305) entgegen der Schwerkraftrichtung vorstehen und eine Werkstück-Auflageebene (11) der weiteren Fördereinheit (102, 202, 302) ausbilden und
- wobei die Auflageelemente (4) der weiteren Fördereinheit (102, 202, 302) gegen eine Senkrechte (12) zu der Werkstück-Auflageebene (11) in einer Förderrichtung (13) geneigt sind, die definiert ist, indem die Auflageelemente (4) in der senkrechten Projektion in die Werkstück-Auflageebene (11) eine Orientierung aufweisen,
• deren Auflageelemente (4) aufgrund einer mittels eines Schwingungserzeugers (10) erzeugten oszillierenden Bewegung der weiteren Fördereinheit (102, 202, 302) längs der Wirkungslinie (7) der Schwerkraft unter der Wirkung des zu fördernden Werkstücks (19) mit ihren freien Enden gegen die Wirkung einer Rückstellkraft relativ zu der Basis (103, 203, 303) in der Förderrichtung (13) der weiteren Fördereinheit (102, 202, 302) auslenkbar sind und
• deren Förderrichtung (13) variabel einstellbar ist, indem die Auflageelemente (4) der weiteren Fördereinheit (102, 202, 302) in ihrer Orientierung variabel einstellbar sind.

9. Vibrationsförderer nach Anspruch 8, **dadurch gekennzeichnet, dass** die weitere Fördereinheit (102, 202, 302) der ersten Fördereinheit (102, 202, 302) in der Förderrichtung (13) der ersten Fördereinheit (102, 202, 302) benachbart ist, derart, dass ein mittels der ersten Fördereinheit (102, 202, 302) in deren Förderrichtung (13) gefördertes Werkstück (19) auf die Auflageelemente (4) der weiteren Fördereinheit (102, 202, 302) gelangt.

10. Vibrationsförderer nach Anspruch 8 oder Anspruch 9, **dadurch gekennzeichnet, dass** die Fördereinheit (102, 202, 302) und die weitere Fördereinheit (102, 202, 302) an einer gemeinsamen Tragstruktur (105, 205, 305) gelagert sind und dass die Fördereinheit (102, 202, 302) und die weitere Fördereinheit (102, 202, 302) mit der längs der Wirkungslinie (7) der Schwerkraft ausgeführten oszillierenden Bewegung antreibbar sind, indem die gemeinsame Tragstruktur (105, 205, 305) mittels eines gemeinsamen Schwingungserzeugers (10) mit der längs der Wirkungslinie (7) der Schwerkraft ausgeführten oszillierenden Bewegung antreibbar ist.

11. Vibrationsförderer nach einem der vorhergehenden Ansprüche, **dadurch gekennzeichnet, dass** die Auflageelemente (4) der Fördereinheit (2, 102, 202 302) oder wenigstens einer der Fördereinheiten (102, 202, 302) mittels eines steuerbaren Stellantriebs (16) in ihrer Orientierung variabel einstellbar sind.

12. Vibrationsförderer nach Anspruch 11, mit mehreren Fördereinheiten (102, 202, 302), **dadurch gekennzeichnet, dass** mittels des steuerbaren Stellantriebs (16) die Auflageelemente (4) einer der Fördereinheiten (102, 202, 302) unabhängig von den Auflageelementen (4) einer anderen Fördereinheit (102, 202, 302) in ihrer Orientierung variabel einstellbar sind.

13. Vibrationsförderer nach Anspruch 11 oder Anspruch 12, **dadurch gekennzeichnet, dass** der steuerbare Stellantrieb (16) in Abhängigkeit von dem zu fördernden Werkstück steuerbar ist.

14. Vibrationsförderer-Anordnung zum Fördern eines flächigen Werkstücks (19), insbesondere eines Blechs, **dadurch gekennzeichnet, dass** mehrere Vibrationsförderer (100) nach einem der vorhergehenden Ansprüche vorgesehen sind, deren Fördereinheiten (102) in einer Förderrichtung der Vibrationsförderer-Anordnung aneinandergereiht sind, derart, dass ein mittels einer Fördereinheit (102) eines Vibrationsförderers (100) in der Förderrichtung gefördertes Werkstück (19) auf eine Fördereinheit (102) eines dem Vibrationsförderer (100) in der Förderrichtung benachbarten Vibrationsförderers (100) gelangt.

15. Maschinelle Anordnung zum Bearbeiten eines flächigen Werkstücks (19), insbesondere eines Blechs, mit zwei Funktionseinheiten (24, 25) sowie mit einem zusätzlich zu den Funktionseinheiten (24, 25) vorgesehenen Vibrationsförderer (100) und/oder mit einer zusätzlich zu den Funktionseinheiten (24, 25) vorgesehenen Vibrationsförderer-Anordnung (400) zum Fördern eines Werkstücks (19) zwischen den Funktionseinheiten (24, 25), **dadurch gekennzeichnet, dass** als Vibrationsförderer (100) der Vibrationsförderer (100) nach einem der Ansprüche 1 bis 13 und/oder als Vibrationsförderer-Anordnung (400) die Vibrationsförderer-Anordnung (400) nach Anspruch 14 vorgesehen ist.
